# EUROPEAN PATENT APPLICATION

(11) **EP 3 192 985 A1**
(43) Date of publication of application: **19.07.2017**
(21) Application number: 16151750.3
(22) Date of filing: 18.01.2016
(51) Int. Cl.: F01K 13/02, F01K 23/10, H02J 3/28

(54) **METHOD FOR OPERATING A POWER PLANT, AND POWER PLANT**

(71) Applicant: General Electric Technology GmbH, 5400 Baden (CH)
(72) Inventor: Zhang, Mengbin, 8112 Otelfingen (CH); Stockmann, Christian, 5430 Wettingen (CH); Chan, Kevin Kok Fun, 5242 Birr (CH); Meier, Marcel, 5412 Gebenstorf (CH); Mueller, Peter-Paul, 8115 Huettikon (CH)
(74) Representative: General Electric Technology GmbH

(57) **Abstract**

A method for operating a power plant (1) is disclosed. The method comprises providing at least one shaft power (P_{sh,GT}, P_{sh,ST}) thereby providing a total shaft power, driving at least one generator thereby providing a total electric power output, providing a first share of the total electric power output to a grid as a grid power output, providing a second share (P_{el,2}) of the total electric power output to at least one power consumer (11,13). The grid power output is modulated independently from the total electric power output and the total shaft power output in modulating the second share (P_{el,2}) of the total electric power output.

## Description

### TECHNICAL FIELD

The present disclosure relates to a method for operating a power plant as set forth in claim 1. It further relates to a power plant, in particular a power plant suitable to be operated according to the disclosed method.

### BACKGROUND OF THE DISCLOSURE

Power plants when operating in a grid need not only to be able to provide a dispatched power to a grid, but also need to provide fast power regulation to support a fairly constant grid frequency. Grid frequency may experience sudden drops for instance in response to the outage of a single power plant in a grid or a sudden undispatched power demand. An electric power grid is more vulnerable to critical frequency drops the smaller the total grid power is and the larger the individual power plants supplying power to the grid are. Furthermore, long-distance power line capacity may limit the overall grid stability.

In response to a critical underfrequency event a power plant may supply additional electric power to the grid to compensate, at least in part, for the outage of another power plant, or a sudden increase in the electric power demand. To maintain grid frequency stability, such response needs to be provided as fast and with as high a power supply gradient as technically possible. At the very first instance of a sudden electric power shortage, or a sudden electric power demand increase, the inertia of rotating power engine shafts of power plants may serve to delay the frequency drop. However, it is critical to compensate for the discrepancy between electric power supply and electric power demand in the grid before the grid frequency has reached a critical level which may in turn cause unintentional underfrequency shutdown of additional power plants, and eventually may result in a grid blackout.

It is known, for instance, to operate power plants below their rated full power in order to provide power reserve for so-called frequency response capability. For instance, a steam turbine engine in a steam or combined cycle power plant may be operated in fixed pressure mode by throttling the steam turbine inlet control valves. Thermal energy stored in the boiler may then be released by opening the steam turbine inlet steam control valve. Likewise, gas turbine power plants may be operated below full power output and may thus provide a power reserve for frequency response operation. US 2014/0239638 discloses a method for operating a combined power plant to provide frequency response capability. US 7,784,286 discloses a method in which demineralized water is injected into the compressor of a gas turbine engine in order to augment plant power output. Usually, the power plant operator is compensated by the grid operator for providing frequency response capability, which usually pays off for the power generation and efficiency penalty due to a de-rated power plant operation. However, the response time for additional power provision thus kept at hand is limited for instance by power plant control, the time needed for the process, e.g. a fluid takes to flow, to cause a power change in the engine's output and admissible temperature gradients.

While said delay times may be fully acceptable in large grids, in which a large multitude of thermal power engines drive generators are operating, and which, due to rotating mass inertia, inherently serve to initially stabilize the grid frequency, or delay the grid frequency drop. In small grids which have no or only limited capacity power line connection to reserve power, such underfrequency may reach a critical value within a short time after the initiation of the disturbance leading to emergency conditions. Such grids may be typically found on islands, but the same conditions may apply to areas of larger grids which only have limited line connection capacity to other areas of the grid. With an increasing prevalence of renewable power the issue gets more pronounced, as renewable power plants provide either no rotating mass inertia, such as photovoltaic power plants, or only limited rotating mass inertia such as wind power plants, and moreover non-dispatchable changes in power production become of increasing significance to grid operation. This calls for almost instantaneous, non-delayed frequency response capability. WO 2009/050205 proposes to operate a power plant which comprises a CO2 capture system and shutting down the CO2 capture system to provide instantaneous additional power to a grid. However, the operation proposed therein requires the power plant to be equipped with a CO2 capture system. The mode of operation proposed in WO 2009/087210 has a major impact on the power plant operation in that while providing frequency response power output the CO2 capture system is not operated. This might cause financial penalties to the power plant operator. Moreover, the CO2 capture system needs to be restarted after the frequency response time is over. In another aspect, a large share of photovoltaic and wind power supply to a grid may not only result in sudden unscheduled power shortages, but may also result in a sudden unscheduled power surplus. While the demand for a fast grid power output increase has been addressed in the art, the proposed methods for operating power plants in a frequency response mode do not address the issue of providing the capability to both increase and decrease the power plant grid output at a high megawatt per second rate.

### LINEOUT OF THE SUBJECT MATTER OF THE PRESENT DISCLOSURE

It is an object of the presently disclosed subject matter to provide a method for operating a power plant, and a power plant, which enable an instantaneous response to changes in grid frequency and/or grid power demand. It is, in another aspect, an object of the presently disclosed subject matter to provide a method for operating a power plant, and a power plant, which enable to modulate the grid power output of the power plant, at least temporarily, independently from the total electric power output and/or the shaft power output of the power plant. Modulating in this respect shall mean the capability to increase the grid power output as well as to decrease the grid power output. It is thus, in still another aspect, an object of the presently disclosed subject matter to provide a method for operating a power plant, and a power plant, which enable an instantaneous response to an increasing grid power demand as well as to a decrease in grid power demand, at a sufficiently high megawatt per second rate. In still further aspects, modulating the grid power output shall be achieved without effecting the overall plant operation, as would be the case, for instance, when shutting down a CO2 capture system. A further object of the presently disclosed subject matter is to provide the instantaneous modulation capability while avoiding excessive thermal gradients to components of the power plant, and the excessive lifetime consumption related thereto. In still another aspect, a method for operating a power plant, and a power plant, shall be disclosed which enable the actual grid power output to follow a change in the grid power output setpoint with a faster response and/or at a higher rate than the shaft power output and accordingly the total electric power generation can be modulated.

This is achieved by the subject matter described in claim 1.

Further effects and advantages of the disclosed subject matter, whether explicitly mentioned or not, will become apparent in view of the disclosure provided below.

Accordingly, disclosed is a method for operating a power plant, the method comprising providing at least one shaft power thereby providing a total shaft power and driving at least one generator thereby providing a total electric power output. It is understood that the total shaft power may be the shaft power provided by one single drive shaft or drive shaft train, but may in other instances be the sum of the shaft powers provided by a multitude of drive shafts or drive shaft trains. Likewise, the total electric power output may be the electric power output from one single generator, but may in other instances be the sum of the electric power outputs from a multitude of generators. The method further comprises providing a first share of the total electric power output to a grid as a grid power output, providing a second share of the total electric power output to at least one power consumer, and modulating the grid power output independently from the total electric power output and the shaft power output in modulating the second share of the total electric power output.

It is understood that decreasing the second share of the total electric power output, or the power consumption of the power consumer, a virtual additional electric power is provided to the grid.

Modulating the grid power output independently from the total electric power output and/or the shaft power output may for one instance comprise maintaining the total electric power output and/or the shaft power output constant, at least for a limited time period, while the grid power output is modulated in modulating the second share of the total electric power output which is consumed by the at least one power consumer. In this respect, the method may comprise modulating the grid power output in modulating the second share of the total electric output while the total shaft power and the total electric power output are constant, in particular in case of small grid frequency deviation and/or for a time period until an initiated change in the shaft output and total electric power output becomes effective. The total shaft power and the total electric power output may either be purposefully maintained constant, or may be constant due to a delayed response on a change of a respective power setpoint, that is, may initially be constant and respond with a delayed change. For another instance, modulating the grid power output independently from the total electric power output and/or the shaft power output may comprise modulating the grid power output in modulating the second share of the total electric power output to achieve an immediate response to a change in the grid power demand, and subsequently modulating the total electric power output and/or the shaft power output with a delayed and/or slower response.

Modulating the second share of the total electric power output may comprise increasing as well as decreasing the power consumption of the at least one power consumer. Thus, the method may be applied to respond to transient increases of the grid power demand as well as to transient decreases of the grid power demand.

The method may comprise modulating the grid power output to match a grid power output setpoint, or a plant load setpoint, respectively. That is, modulating the second share of the electric power output is applied to make up for a delayed response of the total electric power output or a slow response, with a total electric power output having a smaller gradient than the grid power output setpoint.

In another aspect, the method may comprise providing the second share of the total electric power output to a power consumer which is operated independently from the power plant operation. That is, said power consumer is not involved in the power plant cycle operation, as would be the case for instance with a CO2 capture system, boiler pumps, flue gas scrubbing systems and so forth.

As implied above, the method may in certain instances comprise subsequently modulating the total shaft power and thereby the total electric power output. Subsequently modulating may comprise initiating response of the total electric power output delayed or slower than the change of the grid power output setpoint as well as instantaneously initiating said change, but the total electric power output responding delayed or with a limited response speed, due to, for instance, system constraints.

The method may comprise modulating the total shaft power output and thereby the total electric power output to achieve a set controlled difference between the total electric power output and the grid power output. That is, while the modulation of the second share of the total electric power output is applied for a fast response to a transient change in the grid power output setpoint, shaft power output and thereby the total electric power output is subsequently, with the inherent delayed or slow response, controlled to follow the change in the grid power output setpoint, and is controlled to adjust the second share of the total electric power output to a set value.

Modulating the total electric power output may comprise maintaining the total electric power output at a value larger, or at least not lower, than the grid power output. That means, at least in an operating mode wherein frequency response capability is provided, the power consumer is operated to consume electric power.

In certain instances of the operating method it may comprise a cascaded control concept, in which a base control in order to match the grid power requirements is performed in controlling the total shaft power output, while the modulation of the second share of the total electric power output is applied to compensate for a slow response of the shaft power output and accordingly the total electric power output upon transient changes in the grid power output setpoint. For instance, in a combined cycle power plant the gas turbine engine response to a change of the load setpoint is the slowest one, while the steam turbine engine response is faster, in particular if the steam turbine engine is operated in fixed pressure mode with throttled steam turbine inlet control valves. For instance, upon a change in the respective load setpoint, the gas turbine engine may respond and ramp up the related shaft power output with a 2.5 seconds delay. The steam turbine engine may respond and ramp up the related shaft power output with a 1 second delay. Accordingly, the modulation of the second share of the total electric power output may be used for an instantaneous response and to compensate the difference between the power plant grid output setpoint, that is the electric power to be supplied to the grid, and delayed response of the power engines to a change in the load setpoint.

Accordingly, the method may in certain instances comprise that, responsive to a change of a grid power output setpoint, the grid power output is modulated, and further initiating a change of the total electric power output, whereby modulating the second share of the electric power output is used as an initial response to a transient change of the grid power output setpoint to compensate for a slow response of the total electric power output.

As mentioned, the plant may be controlled such that modulating the second share of the electric power output may comprise increasing the second share of the electric power output as well as decreasing the second share of the electric power output dependent on, or responsive to, a change of the grid power output setpoint.

In further instances, the method may comprise that the second share of the electric power output is used to generate at least one storable energy. Depending on actual power demands, said at least one storable energy may either be instantly used, or may be stored in a suitable storage device, for instance for later peak load / power augmentation operation. In this respect, the second share of the electric power output may for instance be provided to a hydrogen generation plant and/or an electrically operated steam generator. Hydrogen from a hydrogen generation plant may for instance be used instantaneously as a fuel in a gas turbine engine of the power plant. In another instance, hydrogen from a hydrogen generation plant may be stored in a storage vessel and may be used later. Hydrogen from a hydrogen generator may for another instance be used, instantaneously or after an intermediate storage, to generate electricity in fuel cells. Steam from an electrically operated steam generator may be used instantly in a steam turbine engine of the power plant, but in other instances the thermal energy from the steam may be stored in a thermal energy storage device. Thermal energy from the steam may later be used to generate steam for the steam turbine engine. Likewise, the steam and/or stored thermal energy may be used for heating purposes, or other industrial purposes. Steam may also be supplied to a combustor or expansion turbine of a gas turbine engine to provide useful power upon expansion in the expansion turbine. It is understood that the above enumeration of storable energies and the use of said storable energies is non-exhaustive, and other instances may be easily conceivable by the skilled person. In another aspect of the present disclosure a power plant is disclosed. In particular, a power plant is disclosed which is suitable for being operated according to the above-described methods.

Accordingly, the herein described power plant, comprises at least one power engine for generating a power engine shaft power output and at least one generator driven by the power engine for generating a total generator electric power output. Said at least one power engine may typically comprise, while not limited to, at least one gas turbine engine, at least one steam turbine engine, or both in a combined cycle power plant. The power plant further comprises a grid connection for providing an electric grid power output to a grid. The power plant further comprises at least one electric power consumer connectable to the generator. The electric power consumer is an independent power consumer. As lined out above, an independent power consumer is a power consumer which is not a part of the power plant operation, apart from the capability of consuming a part of the generated total electric power output. The power plant further comprises a device for modulating a power consumption of the independent power consumer such that the grid power output of the power plant may be controlled independently from the total generator electric power output, or the power engine shaft power output, respectively.

The independent electric power consumer may be a device for converting electric energy into a storable form of energy. As indicated above, said device may for instance comprise an electrolysis plant for the generation of hydrogen, or may for another instance comprise an electrically operated steam generator. The power plant may in addition comprise a storage device for the storable energy. For instance, a thermal energy storage device may be provided for storing heat from the steam produced in an electrically operated steam generator.

It is understood that the features and embodiments disclosed above may be combined with each other. It will further be appreciated that further embodiments are conceivable within the scope of the present disclosure and the claimed subject matter which are obvious and apparent to the skilled person.

### BRIEF DESCRIPTION OF THE DRAWINGS

The subject matter of the present disclosure is now to be explained in more detail by means of selected exemplary embodiments shown in the accompanying drawings. The figures show
- Fig. 1: a first exemplary embodiment of a power plant comprising an independent power consumer;
- Fig. 2: a diagram illustrating an exemplary mode of operating the power plant in response to an increased grid power demand; and
- Fig 3: a second exemplary embodiment of a power plant comprising an independent power consumer.

It is understood that the drawings are highly schematic, and details not required for instruction purposes may have been omitted for the ease of understanding and depiction. It is further understood that the drawings show only selected, illustrative embodiments, and embodiments not shown may still be well within the scope of the herein disclosed and/or claimed subject matter.

### EXEMPLARY MODES OF CARRYING OUT THE TEACHING OF THE PRESENT DISCLOSURE

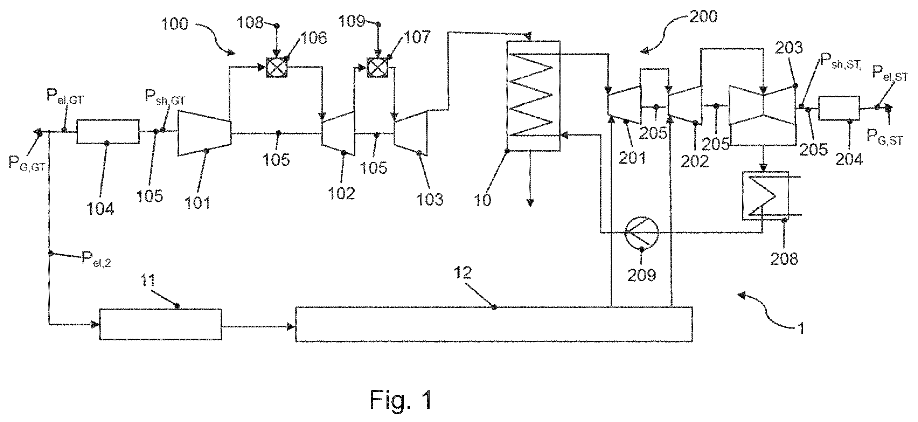

Figure 1 shows a first exemplary embodiment of a power plant 1 suitable for being operated according to the above-described operation method. Power plant 1 is a combined cycle power plant, comprising in a manner well-known to the skilled person, a gas turbine engine 100 and a steam turbine engine 200. It is understood that the power plant may comprise a multitude of gas turbine engines and/or steam turbine engines. Gas turbine engine 100 comprises a compressor 101, a high pressure expansion turbine 102, and a low pressure expansion turbine 103. Compressed working fluid, for instance air, from compressor 101 is provided to high-pressure combustor 106, where it is heated by combustion of a fuel provided by fuel supply line 108 and is partially expanded in high-pressure expansion turbine 102. The still oxygen-rich partly expanded flue gas, after expansion in high-pressure expansion turbine 102, is provided to low-pressure combustor 107, where it is further heated by combustion of a fuel provided through fuel supply line 109. The combustion product from low-pressure combustor 107 is further expanded in low-pressure expansion turbine 103. The flue gas is provided to heat recovery steam generator 10, where it is used to generate steam for steam turbine engine 200. It is understood that the gas turbine engine is shown as a reheat gas turbine engine by way of example only. This is, as obvious to the skilled person, not crucial to the herein disclosed subject matter and it is not mandatory to provide a reheat type gas turbine engine. In expanding the working fluid in expansion turbines 102 and 103 useful power is generated in shaft train 105. This useful power is partly used to drive compressor 101. A surplus useful power is available as gas turbine shaft power output P_{sh,GT} to drive generator 104, thereby providing electric power P_{el,GT}. Steam generated in heat recovery steam generator 10 is expanded in high-pressure turbine 201, intermediate pressure turbine 202, and low-pressure turbine 203 of steam turbine engine 200. Again, the steam turbine engine may be differently configured. The expanded steam is condensed in condenser 208, pressurized in feedwater pump 209, and fed as feedwater to heat recovery steam generator 10 to be again evaporated, overheated and fed into steam turbine engine 200. Through expansion of the steam in the expansion turbines 201, 202 and 203 of the steam turbine engine, useful power is generated in shaft train 205, and the steam turbine shaft power P_{sh,ST} is used to drive steam turbine generator 204, thereby generating steam turbine electric power output P_{el,ST}. It is well understood by the skilled person that combined cycle power plant 1 may comprise a variety of control valves, which are perfectly familiar to the skilled person. It is also understood, that, for instance, a multitude of gas turbine engines may be used to generate the steam for one steam turbine engine. It is also known in the art that the steam turbine engine and the gas turbine engine may drive a common shaft train and a common generator. All these embodiments, and other embodiments of combined cycle power plants, are well-known to the skilled person. It is understood that the sum of all shaft power outputs in a power plant, i.e. in the present example the sum of the gas turbine shaft power P_{sh,GT} and the steam turbine shaft power P_{sh,ST}, represent a total shaft power of the power plant. It is further understood that the sum of all electric power outputs in the power plant, i.e. in the present example the sum of gas turbine electric power output P_{el,GT} and steam turbine electric power output P_{el,ST}, represent a total electric power output. The gas turbine engine provides a gas turbine grid power output P_{G,GT} to the grid. The steam turbine engine provides a steam turbine grid power output P_{G,ST} to the grid. The plant provides an overall grid power output P_{G} = P_{G,GT} + P_{G,ST} to the grid. More generally spoken, the overall grid power output of the plant equals the sum of all grid power outputs of all generators in the plant.

It will be readily appreciated by the skilled person that the general setup of the power plant may vary, and the power plant may comprise a multitude of further components not shown in this exemplary embodiment, but which are perfectly familiar to the skilled person.

An independent power consumer 11 is provided. In the shown instance the independent power consumer 11 is an electrically operated steam generator. Electrically operated steam generator 11 may provide steam to a thermal energy storage unit 12 of a kind generally familiar to the skilled person, for instance a molten salt thermal energy storage device. Steam from electrically operated steam generator 11 may exchange heat with the thermal energy storage unit 12, for instance in heating and/or melting salt contained in the thermal energy storage unit 12. It is known that such thermal energy storage units may be operated at temperatures up to 700°C. The heat stored in thermal energy storage unit 12 may at a later time be used to generate additional steam, in addition to the steam generated in heat recovery steam generator 10, and may then be fed to steam turbine engine 200 in order to generate additional steam turbine shaft power. Depending upon steam pressure, it may also be found appropriate to feed steam generated in thermal energy storage unit 12 to a combustor or expansion turbine of the gas turbine engine 100. Likewise, bypass lines may be provided which allow to feed steam generated in electrically operated steam generator 11 directly to an expansion turbine, either of the gas turbine engine or of the steam turbine engine, or to a combustor of the gas turbine engine. Steam may also be used as a coolant in gas turbine engine 100. In operating the independent power consumer with the consumption of an electric power P_{el,2}, the grid power output of the gas turbine engine is reduced to P_{G,GT} = P_{el,GT} - P_{el,2}. Likewise, the plant total grid power output is reduced to P_{G} = P_{el,GT} +P_{el,ST} - P_{el,2}. In other words, if the independent power consumer is operated to consume a certain electric power consumption, the plant will be operated at a total electric power output, or a total shaft power, which is higher than the total grid power output. Reducing the power consumption of the independent power consumer will accordingly raise the total grid power output of the plant. It may be said that virtual additional grid power output is provided in decreasing the power consumption of the independent power consumer. Likewise, the total grid power output of the plant may be modulated while operating the power plant in a steady-state in modulating the power consumption of the independent power consumer. This may comprise increasing as well as decreasing the total grid power output of the plant. Thus, the plant total grid power output may be modulated faster than the engines driving generators would be able to change load. It should be noted that the operation of the independent power consumer has no immediate effect on the power plant operation, as would be the case if, for instance, the power consumption of a CO2 capture system or any other device immediately integrated in the power plant operation, such as a flue gas scrubbing system, would be reduced. In the exemplary embodiment provided above steam is produced, wherein the heat from the steam is a storable energy which may either be instantly used, or stored in the thermal energy storage device.

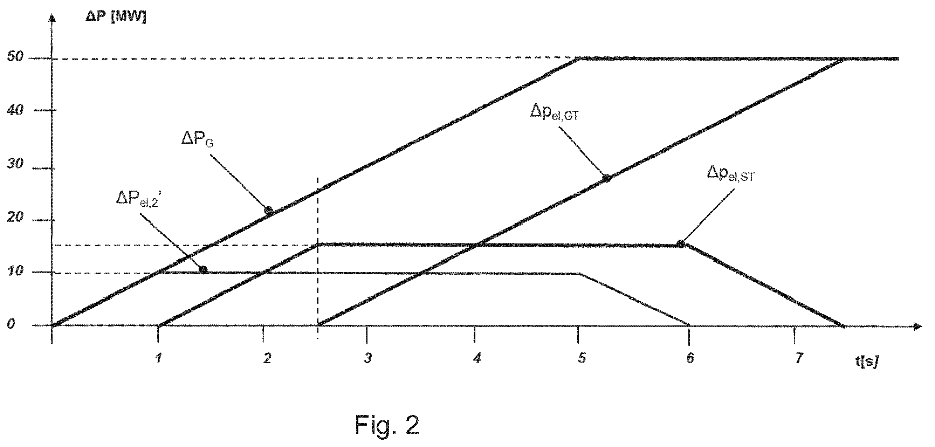

With reference to figure 2, an example for the operation of a power plant comprising an independent power consumer, as, for the instance of the embodiment shown in figure 1, an electrically operated steam generator, is illustrated. In the illustrated instance the power plant is operated providing frequency response capability. For instance, the power plant is operated to provide a power reserve of at least 50 MW, with a response capability of 10 MW per second. The requirement is to provide the frequency response power output ΔP_{G} at the specified megawatts per second rate instantaneously, that is, the power output to the grid shall be ramped up without any delay. As can be seen from the diagram, the additional power output ΔP_{el,GT} from the gas turbine engine starts to ramp up with a delay of approximately 2.5 seconds. This is due to the response time required by the controls of the gas turbine engine, for instance the time which additional working fluid upon adjustment of a variable inlet guide vane needs to reach the combustor, the fuel supply controls need to adjust the fuel flow to an additional working fluid flow, and the time the heated fluid needs to reach the expansion turbine and provide useful power. Moreover, for instance the initial step of adjusting a variable inlet guide vane position cannot be performed in one sudden operation, but also needs to be performed with a limited gradient over time in order not to compromise gas turbine engine controls. Additional power output ΔP_{el,ST} from the steam turbine engine may be provided with a shorter delay time of e.g. 1 second. This delay time is for instance caused by the time additional steam requires to flow through steam lines to the expansion turbines, and due to the compressibility of the steam it further takes time until the additional mass flow becomes effective in all expansion turbine stages, including low-pressure turbine 203. Thus, in order to provide instantaneous additional power ΔP_{G} to the grid, upon a change in the grid power output setpoint of the plant, power consumption of independent power consumer, electrically operated steam generator, 11 is reduced at a 10 MW per second rate, thus providing a virtual electric grid power output ΔP_{el,2}' and instantaneously providing additional grid power output ΔP_{G} to the grid at the required megawatts per second rate. After the steam turbine starts to provide additional electric power output, power consumption of the electrically operated steam generator is maintained constant, thus the virtual additional power generation ΔP_{el,2}' is maintained constant. Electric power output ΔP_{el,ST} from the steam turbine engine is subsequently increased at a10 MW per second rate until additional electric power output ΔP_{el,GT} from the gas turbine engine becomes effective. After additional electric power output ΔP_{el,GT} from the gas turbine engine becomes effective, the steam turbine electric power output is maintained constant. Thus, the power plant total additional grid power output ΔP_{G} is provided instantaneously, without any delay, at the required megawatts per second rate. Once the additional grid power output has reached the set value of, for instance, 50 MW, power consumption of the electrically operated steam generator is ramped up, thus reducing the virtual electric power output ΔP_{el,2}', while the electric power output ΔP_{el,GT} from the gas turbine engine is further ramped up. Once the virtual electric power output ΔP_{el,2}' from the electrically operated steam generator is reduced to zero, additional electric power output ΔP_{el,ST} from the steam turbine engine is ramped down, while electric power output ΔP_{el,GT} from the gas turbine engine is further ramped up.

As soon as the ΔP_{el,ST} is back to zero, the overall power plant is ready for a next frequency drop event.

In this respect, in the initial phase of providing instantaneous additional grid power output the grid power output is modulated independently of a total electric power output of the plant in modulating a share of the total electric power output which is provided to the electrically operated steam generator, or, more generally spoken, a power consumer provided in the plant.

It is understood that in the considerations above the electric power output from the gas turbine engine and the steam turbine engine may be equivalently replaced by the respective useful shaft power output, at least in a qualitative consideration. It is further understood that the order in which virtual electric power output ΔP_{el,2}' from the electrically operated steam generator and additional electric power output ΔP_{el,ST} from the steam turbine engine are ramped down may be changed, or they may be ramped down simultaneously at lower individual megawatts per second rates. It is still further understood that the example provided above is much simplified, as in a combined cycle power plant generally, if the steady-state operation point of the gas turbine engine is shifted to a higher value, the steam turbine engine also will be operated at a higher power output. Thus, additional electric power output ΔP_{el,ST} from the steam turbine engine may not be reduced to zero, and the additional electric power output ΔP_{el,GT} from the gas turbine engine may finally be lower than the additional grid power output ΔP_{G} of the plant.

It is understood that the method may not only be applied to respond to sudden power shortages, but is also applicable to respond to a sudden grid power surplus in increasing the power consumption of the independent power consumer. This is not the case if the power reserve is provided by a power consumer which is directly involved in the power plant operation, such as, for instance, a CO2 capture system or a flue gas scrubbing system.

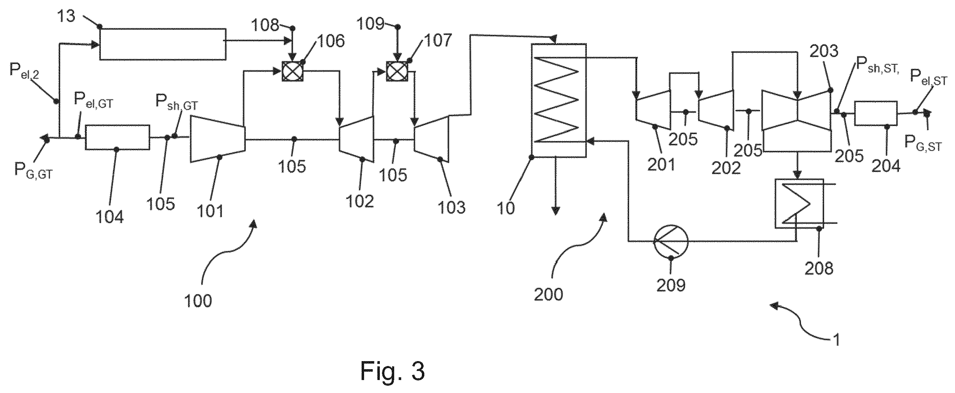

As will be readily appreciated by the skilled person, other power consumers than an electrically operated steam generator may be used to provide the capability of instantaneously providing a virtual electric plant power output for instantaneous frequency response capability. With reference to figure 3 an embodiment of a power plant is shown in which an electrolysis plant 13 is provided as an independent power consumer. Electrolysis plant 13 may generate hydrogen through electrolysis of water and thereby consume a share P_{el,2} of the plant total electric power output. Just as in the example provided above, power consumption of electrolysis plant 13 may be reduced in order to provide a virtual electric power output to the grid. Hydrogen generated in electrolysis plant 13 may be stored, or may be directly fed to a combustor 106. Upon reduction of the power consumption of electrolysis plant 13, hydrogen may be provided to combustor 106 either from a storage device, or may be replaced by fuel provided through fuel feed line 108.

While the subject matter of the disclosure has been explained by means of exemplary embodiments, it is understood that these are in no way intended to limit the scope of the claimed invention. It will be appreciated that the claims cover embodiments not explicitly shown or disclosed herein, and embodiments deviating from those disclosed in the exemplary modes of carrying out the teaching of the present disclosure will still be covered by the claims.

### LIST OF REFERENCE NUMERALS

- 1: power plant, combined cycle power plant
- 10: heat recovery steam generator
- 11: independent power consumer, electrically operated steam generator
- 12: thermal energy storage unit
- 13: independent power consumer, electrolysis plant
- 100: gas turbine engine
- 101: compressor
- 102: high pressure expansion turbine of gas turbine engine
- 103: low pressure expansion turbine of gas turbine engine
- 104: generator
- 105: shaft train of gas turbine engine
- 106: high pressure combustor
- 107: low pressure combustor
- 108: fuel supply line
- 109: fuel supply line
- 200: steam turbine engine
- 201: high pressure turbine of steam turbine engine
- 202: intermediate pressure turbine of steam turbine engine
- 203: low pressure turbine of steam turbine engine
- 204: generator
- 205: shaft train of steam turbine engine
- 208: condenser
- 209: feedwater pump

- P_{sh,GT}: shaft power output of gas turbine engine
- P_{el,GT}: electric power output from generator of gas turbine engine
- P_{G,GT}: gas turbine grid power output
- P_{sh,ST}: shaft power output of steam turbine engine
- P_{el,ST}: electric power output from generator of steam turbine engine
- P_{G,ST}: steam turbine grid power output
- P_{el,2}: power consumption of power consumer
- ΔP_{G}: frequency response grid power output
- ΔP_{el,GT}: frequency response additional power output from gas turbine engine
- ΔP_{el,ST}: frequency response additional power output from steam turbine engine
- ΔP_{el,2}': frequency response additional grid power output due to reduction of power consumption of power consumer, virtual electric power output

## Claims

1. A method for operating a power plant (1), the method comprising providing at least one shaft power (P_{sh,GT}, P_{sh,ST}) thereby providing a total shaft power, driving at least one generator thereby providing a total electric power output,
providing a first share of the total electric power output to a grid as a grid power output,
providing a second share (P_{el,2}) of the total electric power output to at least one power consumer (11,13),
**characterized in** modulating the grid power output independently from the total electric power output and the total shaft power output in modulating the second share (P_{el,2}) of the total electric power output.

2. The method according to claim 1, **characterized in** modulating the grid power output in modulating the second share (P_{el,2}) of the total electric output while the total shaft power and the total electric power output are constant.

3. The method according to any of the preceding claims, **characterized in** modulating the grid power output to match a grid power output setpoint.

4. The method according to any of the preceding claims, **characterized in** comprising providing the second share (P_{el,2}) of the total electric power output to a power consumer (11, 13) which is operated independently from the power plant operation.

5. The method according to any of the preceding claims, **characterized in** subsequently modulating the total shaft power and thereby the total electric power output.

6. The method according to any of the preceding claims, **characterized in** modulating the total shaft power output and thereby the total electric power output to achieve a set controlled difference between the total electric power output and the grid power output.

7. The method according to claim 5 or 6, wherein modulating the total electric power output comprises maintaining the total electric power output at a value larger than the grid power output.

8. The method according to any of the preceding claims, **characterized in that** responsive to a change of a grid power output setpoint the grid power output is modulated, comprising initiating a change of the total electric power output, whereby modulating the second share (P_{el,2}) of the electric power output is used as an initial response to a change (ΔP_{G}) of a grid power output setpoint to compensate for a slow response of the total electric power output.

9. The method according to any of the preceding claims, **characterized in that** the plant (1) is controlled such that modulating the second share (P_{el,2}) of the electric power output may comprise increasing the second share (P_{el,2}) of the electric power output as well as decreasing the second share (P_{el,2}) of the electric power output dependent on a change of the grid power output setpoint.

10. The method according to any of the preceding claims, **characterized in that** the second share (P_{el,2}) of the electric power output is used to generate at least one storable energy.

11. The method according to the preceding claim, **characterized in** providing the second share (P_{el,2}) of the electric power output to at least one of a hydrogen generation plant and/or an electrically operated steam generator.

12. A power plant (1), comprising at least one power engine (100, 200) for generating a power engine shaft power output (P_{sh,GT}, P_{sh,ST}) and at least one generator (104, 204) driven by the power engine (100, 200) for generating a total generator electric power output, the power plant further comprising a grid connection for providing an electric grid power output (P_{G,GT}, P_{G,ST}) to a grid, the power plant further comprising at least one electric power consumer (11, 13) connectable to the generator (104, 204), **characterized in that** the electric power consumer (11, 13) is an independent power consumer and the power plant further comprises a device for modulating a power consumption (P_{el,2}) of the independent power consumer (11, 13) such that the grid power output of the power plant may be controlled independently from the total generator electric power output, or the power engine shaft power output, respectively.

13. The power plant according to claim 12, **characterized in that** the independent electric power consumer (11, 13) is a device for converting electric energy into a storable form of energy, wherein in particular the power plant comprises a storage device (12) for the storable energy.

14. The power plant according to claim 12 or 13, **characterized in that** the independent electric power consumer is at least one of an electrically heated steam generator (11) and an electrolysis plant (13).

15. The power plant according to claim 14, **characterized in that** the power plant comprises a TES device (12) for storing thermal energy provided in the steam generator.
